(19)

Europäisches
Patentamt
European
Patent Office
Office européen
des brevets

(11) **EP 2 207 351 A1**

(12) **EUROPEAN PATENT APPLICATION**
published in accordance with Art. 153(4) EPC

(43) Date of publication:
**14.07.2010 Bulletin 2010/28**

(21) Application number: **08839871.4**

(22) Date of filing: **09.10.2008**

(51) Int Cl.:
*H04N 7/24* (2006.01)      *H04N 13/00* (2006.01)

(86) International application number:
**PCT/CN2008/072622**

(87) International publication number:
**WO 2009/049533 (23.04.2009 Gazette 2009/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.10.2007  CN 200710180315**

(71) Applicant: **Huawei Technologies Co., Ltd.
Longgang District, Shenzhen
Guangdong 518129 (CN)**

(72) Inventors:
• **LIN, Sixin
Guangdong Province 518129 (CN)**

• **YANG, Haitao
Guangdong Province 518129 (CN)**
• **CHANG, Yilin
Guangdong Province 518129 (CN)**
• **HUO, Junyan
Guangdong Province 518129 (CN)**
• **GAO, Shan
Guangdong Province 518129 (CN)**
• **XIONG, Lianhuan
Guangdong Province 518129 (CN)**

(74) Representative: **Gleiter, Hermann
Pfenning, Meinig & Partner GbR
Patent- und Rechtsanwälte
Theresienhöhe 13
80339 München (DE)**

(54) **THE VIDEO ENCODING AND DECODING METHOD AND CORRESPONDING CODEC BASED ON THE MOTION SKIP MODE**

(57)     A video coding method based on a motion skip mode (MSM) is provided. The method includes the following steps. A corresponding reference block of a current macro block to be encoded in a view-point reference image is determined, according to a direction of a disparity vector from a current image relative to the view-point reference image deduced by using a block smaller than $16 \times 16$ pixels as a base unit. The current macro block to be encoded is then encoded according to motion information of a macro block that the determined corresponding reference block belongs to. Other related video coding methods and corresponding codecs based on the MSM are also provided. Therefore, macro block motion information (MMI) of the currently encoded macro block at a corresponding position in the view-point reference image can be more accurately obtained, thereby improving a coding efficiency of the MSM.

FIG. 3

EP 2 207 351 A1

**Description**

**FIELD OF THE TECHNOLOGY**

The present invention relates to the field of video coding and decoding technology, and more particularly to a video coding and decoding method and a codec based on a motion skip mode (MSM).

**BACKGROUND OF THE INVENTION**

With the development of multimedia communication technologies, people are no longer satisfied with conventional fixed view-point vision and 2D plane vision, but demand free view-point videos and 3D videos in various application fields, such as entertainment, education, sightseeing, and surgery. For example, a free view-point television (FTV) with its viewing angle capable of being selected by a viewer, and a 3-dimensional television (3DTV) capable of playing videos at different viewing angles for viewers at different positions are needed. In the above applications, several video cameras are required to simultaneously obtain video signals of the same scenario from different viewing angles at different spatial positions, and effectively compress, encode, and transmit a group of obtained video signals. The group of obtained videos is called multi-view videos, and the compression and coding process on the videos is called multi-view video coding (MVC). Apparently, the MVC technology is critical to the implementation of all the above free view-point video and 3D video applications.

In the MVC technology, the MVC may be simply implemented through independent coding and transmission of each view-point video signal, and this process is called video simulcast. The video simulcast merely utilizes time correlation in each view-point video signal, and the amount of obtained data increases linearly with the adding of the number of the view-points, so that the coding efficiency is low. Currently, the MVC technology mainly focuses on the study of how to effectively utilize the correlations between different view-point images to remove redundant information from different view-point videos, so as to improve the coding efficiency of the MVC.

In order to improve the coding efficiency of the MVC, an MSM is provided for multi-view prediction. In the MSM technology, motion information in an adjacent view-point image is directly employed for the coding of the current view-point image by using high similarity in the motion of the adjacent view-point image, so as to save the bit overhead required by some macro block motion information (MMI) in an encoded image, thereby improving the compression efficiency of the MVC.

The MMI includes a $16 \times 16$ macro block partition mode, a segmentation mode of each block having an accuracy of $8 \times 8$ pixels in the macro block, a reference image index of each $8 \times 8$ block in the macro block, and a motion vector of each 4x4 block in the macro block. The MSM mainly includes the following two processes.

A global disparity vector (GDV) is deduced; and

MMI at a corresponding position in a reference image is deduced.

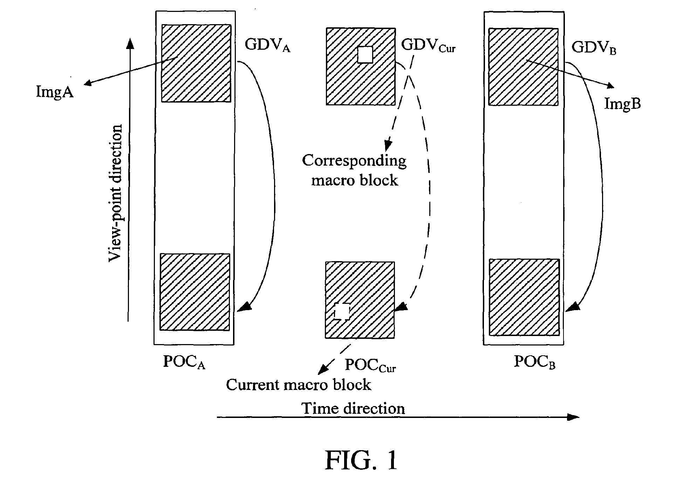

FIG 1 is a schematic diagram of a process of deducing a GDV in the prior art. Referring to FIG 1, a macro block of $16 \times 16$ pixels is firstly used as a base unit, and set as an anchor frame in the MVC, that is, a GDV between an encoded image in the block of FIG 1 and a view-point reference image. The GDV is encoded and then transmitted. A $GDV_{cur}$ of a non-anchor frame Imgcur is deduced by using $GDV_A$ and $GDV_B$ of anchor frames ImgA and ImgB according to the following Formula (1), where $POC_A$, $POC_B$, and $POC_{cur}$ are respectively image sequence numbers having the same time coordinates as ImgA, ImgB, and Imgcur in a group of multi-view videos.

$$GDV_{cur} = GDV_A + \left\lfloor \frac{POC_{cur} - POC_A}{POC_B - POC_A} \times (GDV_B - GDV_A) \right\rfloor \qquad \text{Formula (1)}$$

After the $GDV_{cur}$ of the currently encoded image Imgcur is determined, a corresponding macro block $MB_{cor}$ of each macro block $MB_{cur}$ in the Imgcur in the view-point reference video image is determined according to the determined $GDV_{cur}$, and MMI of the $MB_{cor}$ serves as the MMI of the $MB_{cur}$, so as to implement subsequent motion compensation on the macro block $MB_{cur}$ by using the motion information. A corresponding macro block of the reference frame is found in the image for prediction to obtain residual data, and an overhead RDCostMBcur of the macro block $MB_{cur}$ using the MSM mode is calculated. If the calculated overhead RDCostMBcur of the macro block $MB_{cur}$ is smaller than the corresponding mode overhead of other macro blocks, the MSM is selected as the final mode of the macro block $MB_{cur}$.

It is assumed that the currently encoded image has two view-point reference images, and if one of the two view-point reference images fails to provide valid MMI for the current macro block $MB_{cur}$ in the encoded frame, the MMI in the other view-point reference image is employed for measuring whether the MSM mode is the final mode of the current macro block $MB_{cur}$.

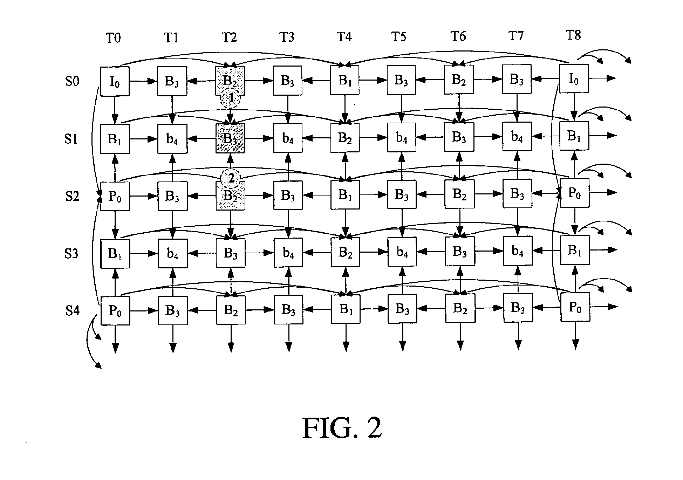

FIG 2 is a schematic diagram showing that the encoded image has two view-point reference images. For an image B3 at a position of S1/T2, an image B2 at a position of S0/T2 is firstly configured to deduce the MMI of the current macro block $MB_{cur}$, and if the corresponding macro block in the image B2 is encoded by using an intra-frame mode, an image B2 at a position of S2/T2 is configured to deduce the MMI of the current macro block $MB_{cur}$.

In order to notify a decoding end whether each macro block in the image uses the MSM mode, a coding end needs to add a motion_skip_flag in an encoded stream at the macro block level, and if the flag is set to 1, it indicates that the current macro block adopts the MSM mode.

As shown in FIG 2, if the currently encoded image has a plurality of view-point reference images, the desired MMI is selected from the motion information of all the view-point reference images according to a fixed priority selection order in the MSM, so that the MMI of the view-point reference image of a low priority cannot be effectively used. Therefore, corresponding improvements are made to the MSM in the prior art: The optimal MMI is selected for each macro block in the currently encoded image from the MMI of the corresponding macro blocks in all the view-point reference images, according to an optimality principle of an overhead RDCostMBcur of using the MSM mode, that is, a rate-distortion cost (RDCost), and a selection flag of the view-point reference image is added in the encoded stream of each macro block in the encoded image, so as to notify the decoder end of the information about the view-point reference image that the MMI of the current macro block belongs to through the flag.

The improved MSM solution may be employed to flexibly select the MMI of the current macro block in the case that the currently encoded image has a plurality of view-point reference images, thereby improving the efficiency of the MVC.

However, in the implementation of the present invention, the inventors found that, no matter in the existing MSM technology or the improved MSM technology, a macro block of $16 \times 16$ pixels is used as a base unit to deduce the GDV and deduce the MMI at the corresponding position in the reference image. In this manner, the GDV between the currently encoded image and the view-point reference image is inaccurately obtained, and the MMI of the currently encoded macro block at the corresponding position in the view-point reference image is also inaccurately obtained.

Moreover, as the GDV has a low accuracy, it is difficult to accurately find the corresponding macro block of each macro block in the currently encoded image from the view-point reference image by using the GDV, and thus the accuracy of the MMI obtained from the corresponding macro block directed by the GDV is also low.

## SUMMARY OF THE INVENTION

The present invention is directed to a video coding and decoding method and a codec based on an MSM, so as to obtain MMI of a currently encoded macro block at a corresponding position in a view-point reference image more accurately, thereby improving a coding efficiency of the MSM.

An embodiment of the present invention provides an MVC method based on an MSM, which includes: determining a corresponding reference block of a current macro block to be encoded in a view-point reference image, according to a direction of a disparity vector from a current image relative to the view-point reference image deduced by using a block smaller than $16 \times 16$ pixels as a base unit; and encoding the current macro block to be encoded, according to motion information of a macro block that the determined corresponding reference block belongs to.

An embodiment of the present invention provides a multi-view video decoding method based on an MSM, which includes: determining a corresponding reference block of a current macro block to be decoded in a view-point reference image, according to a direction of a disparity vector from a current image relative to the view-point reference image deduced by using a block smaller than $16 \times 16$ pixels as a base unit; and decoding the current macro block to be decoded, according to motion information of a macro block that the determined corresponding reference block belongs to.

An embodiment of the present invention provides a multi-view video coder based on an MSM, which includes: a unit, configured to determine a corresponding reference block of a current macro block to be encoded in a view-point reference image, according to a direction of a disparity vector from a current image relative to the view-point reference image deduced by using a block smaller than $16 \times 16$ pixels as a base unit; and a unit, configured to encode the current macro block to be encoded, according to motion information of a macro block that the determined corresponding reference block belongs to.

An embodiment of the present invention provides a multi-view video decoder based on an MSM, which includes: a unit, configured to determine a corresponding reference block of a current macro block to be decoded in a view-point reference image, according to a direction of a disparity vector from a current image relative to the view-point reference image deduced by using a block smaller than $16 \times 16$ pixels as a base unit; and a unit, configured to decode the current macro block to be decoded, according to motion information of a macro block that the determined corresponding reference block belongs to.

An embodiment of the present invention provides an MVC method based on an MSM, which includes: for each view-point reference image of a current image, determining a corresponding reference block of a current macro block to be encoded in the view-point reference image, according to a direction of a GDV from the current image relative to the view-point reference image deduced by using a block smaller than 16×16 pixels as a base unit; performing MSM coding measurement on the current macro block to be encoded, according to motion information of a macro block that the determined corresponding reference block of the current macro block to be encoded in each view-point reference image belongs to; selecting an optimal macro block from the macro blocks, according to a rate-distortion performance optimality principle based on measurement results; and encoding the current macro block to be encoded, according to motion information of the selected macro block, and carrying in an encoded stream a flag of the view-point reference image where the selected macro block is located.

An embodiment of the present invention provides a multi-view video decoding method based on an MSM, which includes: decoding a view-point reference image flag carried in a received encoded stream; determining a corresponding reference block of a current macro block to be decoded in an obtained view-point reference image identified by the view-point reference image flag, according to a direction of a disparity vector from a current image relative to the view-point reference image deduced by using a block smaller than 16× 16 pixels as a base unit; and decoding the current macro block to be decoded, according to motion information of a macro block that the determined corresponding reference block belongs to.

An embodiment of the present invention provides a multi-view video coder based on an MSM, which includes: a unit, configured to, for each view-point reference image of a current image, determine a corresponding reference block of a current macro block to be encoded in each view-point reference image, according to a direction of a disparity vector from the current image relative to the view-point reference image deduced by using a block smaller than 16×16 pixels as a base unit; a unit, configured to perform MSM coding measurement on the current macro block to be encoded, according to motion information of a macro block that the determined corresponding reference block of the current macro block to be encoded in each view-point reference image belongs to; a unit, configured to select an optimal macro block from the macro blocks, according to a rate-distortion performance optimality principle based on measurement results; and a unit, configured to encode the current macro block to be encoded, according to motion information of the selected macro block, and carry in an encoded stream a flag of the view-point reference image where the selected macro block is located.

An embodiment of the present invention provides a multi-view video decoder based on an MSM, which includes: a unit, configured to decode a view-point reference image flag carried in a received encoded stream; a unit, configured to determine a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; and a unit, configured to decode the current macro block to be decoded, according to motion information of a macro block that the determined corresponding reference block belongs to.

An embodiment of the present invention provides an MVC method based on an MSM, which includes: determining a corresponding reference block of a current macro block to be encoded in a view-point reference image, according to a direction of a disparity vector from a current image relative to the view-point reference image deduced by using a block smaller than 16×16 pixels as a base unit; performing MSM coding measurement on the current macro block to be encoded, according to motion information of each macro block formed by base unit blocks within a specified range around the determined corresponding reference block; selecting an optimal macro block from the specified range around the reference block, according to a rate-distortion performance optimality principle based on measurement results; and encoding the current macro block to be encoded, according to motion information of the selected macro block.

An embodiment of the present invention provides a multi-view video decoding method based on an MSM, which includes: determining a corresponding reference block of a current macro block to be decoded in a view-point reference image, according to a direction of a disparity vector from a current image relative to the view-point reference image deduced by using a block smaller than 16×16 pixels as a base unit; decoding offset information carried in a received encoded stream; and deviating by a corresponding offset in the determined corresponding reference block according to the offset information to obtain a corresponding macro block, and decoding the current macro block to be decoded, according to motion information of the obtained macro block.

An embodiment of the present invention provides a multi-view video coder based on an MSM, which includes: a unit, configured to determine a corresponding reference block of a current macro block to be encoded in a view-point reference image, according to a direction of a disparity vector from a current image relative to the view-point reference image deduced by using a block smaller than 16×16 pixels as a base unit; a unit, configured to perform MSM coding measurement on the current macro block to be encoded, according to motion information of each macro block formed by the base unit blocks within a specified range around the determined corresponding reference block; a unit, configured to select an optimal macro block from the specified range around the reference block, according to a rate-distortion performance optimality principle based on measurement results; and a unit, configured to encode the current macro block to be encoded, according to motion information of the selected macro block.

An embodiment of the present invention provides a multi-view video decoder based on an MSM, which includes: a unit, configured to determine a corresponding reference block of a current macro block to be decoded in a view-point reference image, according to a direction of a disparity vector from a current image relative to the view-point reference image deduced by using a block smaller than 16×16 pixels as a base unit; a unit, configured to decode offset information carried in a received encoded stream; and a unit, configured to deviate by a corresponding offset in the determined corresponding reference block according to the offset information to obtain a corresponding macro block, and decode the current macro block to be decoded, according to motion information of the obtained macro block.

An embodiment of the present invention provides an MVC method based on an MSM, which includes: for each view-point reference image of a current image, determining a corresponding reference block of a current macro block to be encoded in the view-point reference image, according to a direction of a disparity vector from the current image relative to the view-point reference image deduced by using a block smaller than 16×16 pixels as a base unit; performing MSM measurement on the current macro block to be encoded, according to motion information of each macro block formed by the base unit blocks within a specified range around the determined corresponding reference block; selecting an optimal macro block from the specified range around the reference block, according to a rate-distortion performance optimality principle based on measurement results; performing MSM coding measurement on the current macro block to be encoded, according to motion information of the macro block selected from each view-point reference image; selecting an optimal macro block from the macro blocks selected from the view-point reference images, according to the rate-distortion performance optimality principle based on measurement results; and encoding the current macro block to be encoded, according to motion information of the selected macro block, and carrying in an encoded stream a flag of the view-point reference image where the selected macro block is located.

An embodiment of the present invention provides a multi-view video decoding method based on an MSM, which includes: decoding a view-point reference image flag carried in a received encoded stream; determining a corresponding reference block of a current macro block to be decoded in an obtained view-point reference image identified by the view-point reference image flag, according to a direction of a disparity vector from a current image relative to the view-point reference image deduced by using a block smaller than 16× 16 pixels as a base unit; decoding offset information carried in the received encoded stream; and deviating by a corresponding offset in the determined corresponding reference block according to the offset information to obtain a corresponding macro block, and decoding the current macro block to be decoded, according to motion information of the obtained macro block.

An embodiment of the present invention provides a multi-view video coder based on an MSM, which includes: a unit, configured to, for each view-point reference image of a current image, determine a corresponding reference block of a current macro block to be encoded in the view-point reference image, according to a direction of a disparity vector from the current image relative to the view-point reference image deduced by using a block smaller than 16×16 pixels as a base unit; a unit, configured to perform MSM measurement on the current macro block to be encoded, according to motion information of each macro block formed by the base unit blocks within a specified range around the determined corresponding reference block; a unit, configured to select an optimal macro block from the specified range around the reference block, according to a rate-distortion performance optimality principle based on measurement results; a unit, configured to perform MSM coding measurement on the current macro block to be encoded, according to motion information of the macro block selected from each view-point reference image; a unit, configured to select an optimal macro block from the macro blocks selected from the view-point reference images, according to the rate-distortion performance optimality principle based on measurement results; and a unit, configured to encode the current macro block to be encoded, according to motion information of the selected macro block, and carry in an encoded stream a flag of the view-point reference image where the selected macro block is located.

An embodiment of the present invention provides a multi-view video decoder based on an MSM, which includes: a unit, configured to decode a view-point reference image flag carried in a received encoded stream; a unit, configured to determine a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; a unit, configured to decode offset information carried in the received encoded stream; and a unit, configured to deviate by a corresponding offset in the determined corresponding reference block according to the offset information to obtain a corresponding macro block, and decode the current macro block to be decoded, according to motion information of the obtained macro block.

An embodiment of the present invention provides a video coding method based on an MSM, which includes: determining a corresponding reference block of a current macro block to be encoded in an adjacent frame image, according to a direction of a motion vector from a current image relative to the adjacent frame image deduced by using a block smaller than 16×16 pixels as a base unit; and encoding the current macro block to be encoded, according to motion information of a macro block that the determined corresponding reference block belongs to.

An embodiment of the present invention provides a video decoding method based on an MSM, which includes: determining a corresponding reference block of a current macro block to be decoded in an adjacent frame image, according to a direction of a motion vector from a current image relative to the adjacent frame image deduced by using a block smaller than 16×16 pixels as a base unit; and decoding the current macro block to be decoded, according to motion information of a macro block that the determined corresponding reference block belongs to.

An embodiment of the present invention provides a video coder based on an MSM, which includes: a unit, configured to determine a corresponding reference block of a current macro block to be encoded in an adjacent frame image, according to a direction of a motion vector from a current image relative to the adjacent frame image deduced by using a block smaller than 16×16 pixels as a base unit; and a unit, configured to encode the current macro block to be encoded, according to motion information of a macro block that the determined corresponding reference block belongs to.

An embodiment of the present invention provides a video decoder based on an MSM, which includes: a unit, configured to determine a corresponding reference block of a current macro block to be decoded in an adjacent frame image, according to a direction of a motion vector from a current image relative to the adjacent frame image deduced by using a block smaller than 16×16 pixels as a base unit; and a unit, configured to decode the current macro block to be decoded, according to motion information of a macro block that the determined corresponding reference block belongs to.

An embodiment of the present invention provides a video coding method based on an MSM, which includes: determining a corresponding reference block of a current macro block to be encoded in an adjacent frame image, according to a direction of a motion vector from a current image relative to the adjacent frame image deduced by using a block smaller than 16×16 pixels as a base unit; performing MSM measurement on the current macro block to be encoded, according to motion information of each macro block formed by the base unit blocks within a specified range around the determined corresponding reference block; selecting an optimal macro block from the specified range around the reference block, according to a rate-distortion performance optimality principle based on measurement results; and encoding the current macro block to be encoded, according to motion information of the selected macro block.

An embodiment of the present invention provides a video decoding method based on an MSM, which includes: determining a corresponding reference block of a current macro block to be decoded in an adjacent frame image, according to a direction of a motion vector from a current image relative to the adjacent frame image deduced by using a block smaller than 16×16 pixels as a base unit; decoding offset information carried in a received encoded stream; and deviating by a corresponding offset in the determined corresponding reference block according to the offset information to obtain a corresponding macro block, and decoding the current macro block to be decoded, according to motion information of the obtained macro block.

An embodiment of the present invention provides a video coder based on an MSM, which includes: a unit, configured to determine a corresponding reference block of a current macro block to be encoded in an adjacent frame image, according to a direction of a motion vector from a current image relative to the adjacent frame image deduced by using a block smaller than 16×16 pixels as a base unit; a unit, configured to perform MSM measurement on the current macro block to be encoded, according to motion information of each macro block formed by the base unit blocks within a specified range around the determined corresponding reference block; a unit, configured to select an optimal macro block from the specified range around the reference block, according to a rate-distortion performance optimality principle based on measurement results; and a unit, configured to encode the current macro block to be encoded, according to motion information of the selected macro block.

An embodiment of the present invention provides a video decoder based on an MSM, which includes: a unit, configured to determine a corresponding reference block of a current macro block to be decoded in an adjacent frame image, according to a direction of a motion vector from a current image relative to the adjacent frame image deduced by using a block smaller than 16×16 pixels as a base unit, and; a unit, configured to decode offset information carried in a received encoded stream; and a unit, configured to deviate by a corresponding offset in the determined corresponding reference block according to the offset information to obtain a corresponding macro block, and decode the current macro block to be decoded, according to motion information of the obtained macro block.

In the solutions according to the embodiments of the present invention, a block smaller than 16×16 pixels is used as a base unit to deduce the GDV and deduce the MMI of the currently encoded macroblock in the view-point reference image. In this manner, the GDV between the currently encoded image and the view-point reference image is more accurately obtained, and the MMI of the currently encoded macro block at a corresponding position in the view-point reference image is also obtained more accurately.

Moreover, a specified MMI searching range is provided in the view-point reference image, so that the corresponding MMI of each macro block in the encoded image can be more accurately found in the view-point reference image, thereby improving the coding efficiency of the MVC.

In addition, according to the embodiments of the present invention, when the current image has a plurality of view-point reference images, the MMI having the optimal performance is found from the view-point reference images, so that the motion information in all the view-point reference images can be effectively used, and therefore the coding efficiency of the MVC is further improved.

**BRIEF DESCRIPTION OF THE DRAWINGS**

FIG 1 is a schematic diagram of a process of deducing a GDV in the prior art;

FIG 2 is a schematic diagram showing that an encoded image has two view-point reference images;

FIG 3 is a schematic diagram of a process of deducing MMI of a view-point reference image according to an embodiment of the present invention;

FIG 4a is a schematic diagram of a first combination mode of a reference macro block according to an embodiment of the present invention;

FIG 4b is a schematic diagram of a second combination mode of the reference macro block according to an embodiment of the present invention;

FIG 4c is a schematic diagram of a third combination mode of the reference macro block according to an embodiment of the present invention; and

FIG 4d is a schematic diagram of a fourth combination mode of the reference macro block according to an embodiment of the present invention.

**DETAILED DESCRIPTION OF THE EMBODIMENTS**

Examples are given below for illustration by applying the solutions according to the embodiments of the present invention in a video coding standard H.264/AVC and a joint multi-view video model (JMVM) based on the H.264/AVC standard, but the embodiments of the present invention may also be applied to other video coding standards.

Motion information of each macro block in an image includes macro block type, reference image index (Refldx), and motion vector (mv). In the prior art, an MSM mode adopts a $16 \times 16$ image block as a base unit, and MMI of each macro block is integrally used. In the embodiments of the present invention, an image block smaller than $16 \times 16$ pixels is used as a base unit. A block of $8 \times 8$ pixels used as a base unit is taken as an example for illustration in the following embodiment, and other blocks smaller than $16 \times 16$ pixels may also be used as a base unit. In this manner, new motion information of a macro block of $16 \times 16$ pixels is obtained by combining the motion information of four spatially adjacent $8 \times 8$ image blocks, so as to obtain more optional MMI, thereby effectively improving an implementation accuracy of the MSM.

In the embodiments of the present invention, since $8 \times 8$ image blocks are used as base units in the implementation of the MSM, in order to maintain consistent computation accuracy, a GDV needs to be deduced based on the $8 \times 8$ image blocks.

However, the GDV deduced based on the $8 \times 8$ image blocks can only roughly reflect depth characteristics of main image objects in an image scenario, so that it needs further improvement on the accuracy of finding the corresponding MMI of the currently encoded macro block in the view-point reference image based on the deduced GDV.

It is discovered through researches that, the corresponding macro block of the currently encoded macro block in the view-point reference image is usually not the image block directed by the GDV, but the corresponding macro block is distributed around the image block directed by the GDV Based on this, in the embodiments of the present invention, a searching range of adjacent images centered by the image block directed by the GDV is provided, MSM coding measurement is performed on the currently encoded image block based on the motion information of each macro block in the searching range, an optimal macro block is selected from the macro blocks, according to a rate-distortion performance optimality principle, and the motion information of the selected macro block serves as the motion information of the corresponding macro block of the currently encoded macro block in the view-point reference image. In this manner, the corresponding macro block of the currently encoded macro block in the view-point reference image is found accurately, and the motion information of the optimal macro block is employed to perform MSM coding measurement on the currently encoded macro block, so as to greatly improve the coding efficiency of the MVC. Similarly, the offset position information of the selected macro block in the reference image needs to be written into an encoded stream of the currently encoded macro block.

When the currently encoded image has a plurality of view-point reference images, as shown in FIG 2, according to the MSM processing mode in the prior art, the view-point reference images are always arranged in a fixed priority order, and the MMI in the view-point reference image of a high priority is preferentially used. However, due to the differences on the characteristics of the view-point reference images, the currently encoded block may be matched with more accurate MMI in the view-point reference image of a low priority, or the view-point reference image of a low priority may provide more accurate MMI.

Therefore, in the embodiments of the present invention, for a currently encoded image having two or more view-point reference images, when each macro block in the image is encoded, optimal MMI of the macro block in each of the view-point reference images is adopted to perform MSM coding measurement on the current macro block respectively, an optimal macro block is selected from the macro blocks, according to a rate-distortion performance optimality principle, motion information of the selected macro block serves as the MMI finally used by the currently encoded macro block, and flag information of the reference image where the selected macro block is located is written into an encoded stream when the current macro block is encoded.

The implementation of the embodiments of the present invention at a coder end and a decoder end is illustrated in detail below.

A coding process of a coder at the coder end is described in the following.

In step 1, before a current image is encoded, an image block of 8×8 pixels is used as a base unit, and a GDV between the current image and a view-point reference image block is calculated according to the following Formula (2):

$$GDV = (x, y) = \arg\min_{-SR \le x, y \le SR} \{MAD(8*x, 8*y)\}$$

Formula (2)

In the formula, SR denotes a searching range of the GDV of 8×8 image blocks, and the function $MAD(x,y)$ denotes the amount of residual signal energy obtained by using the current GDV. A specific definition of $MAD(x, y)$ is shown in the following Formula (3):

$$MAD(x,y) = \frac{1}{(h-y)(w-x)} \sum_{i=0}^{w-x-1} \sum_{j=0}^{h-y-1} |I_r(i+x, j+y) - I_c(i,j)|$$

Formula (3)

In the formula, Ir denotes a reference image, Ic denotes a currently encoded image, and w, h respectively denote the width and height of the image; i, j respectively denote horizontal and vertical coordinates of pixels in the image; and x, y are rounded pixel values, the vector (x, y) denotes a global disparity of overall pixel accuracy between Ir and Ic.

The GDV calculated from the above formulae needs to be encoded and transmitted, so that segment-level syntax in the encoded stream needs to be modified. Taking the JMVM for example, when the encoded image only has two view-point reference images, it is assumed that the two view-point reference images are respectively placed in a reference list L0 and a reference list L1, so that two syntax elements al_disparity_blk_10[compIdx] and global_disparity_blk_11[compIdx] are added in the segment-level syntax, respectively denoting the GDV between the encoded image and the view-point reference image in the reference list L0 as well as the GDV between the encoded image and the view-point reference image in the reference list L1. As shown in Table 1, the GDV is deduced by using the image block of 8×8 pixels as a base unit.

Table 1 Modifications on JMVM slice-level syntax

| slice_header() { | C | Descriptor |
|---|---|---|
| **first_mb_in_slice** | 2 | ue(v) |
| **slice_type** | 2 | ue(v) |
| **ic_enable** | 2 | u(1) |
| if ( anchor_pic_flag) { | | |
| if( slice_type==P\|\|slice_type==B ){ | | |
| for( compIdx = 0; compIdx < 2; | | |
| compIdx++) | | |
| **global_disparity_blk_10** [ compIdx ] | 2 | se(v) |

(continued)

| slice_header() { | C | Descriptor |
|---|---|---|
| } | | |
| if(( slice_type = = B ) { | | |
| for( compIdx = 0; compIdx < 2; | | |
| compIdx++ ) | | |
| **global_disparity_blk_l1** [compIdx] | 2 | se(v) |
| } | | |
| } | | |
| **pic_parameter_set_id** | 2 | ue(v) |
| **Frame_num** | 2 | u(v) |
| } | | |

In step 2, MMI of the currently encoded macro block in the view-point reference image is deduced. Firstly, the view-point reference image is divided into a set of image blocks of 8×8 pixels, and the 8×8 image block is used as a base unit to describe coordinates in the reference image.

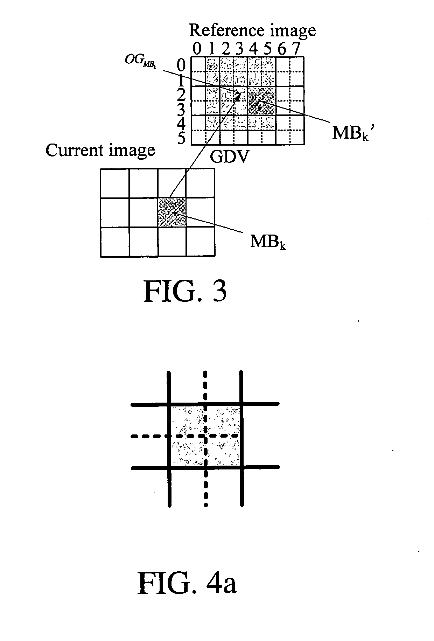

FIG 3 is a schematic diagram of a process of deducing MMI of a view-point reference image according to an embodiment of the present invention, where solid lines denote the segmentation of macro blocks of 16×16 pixels, dashed lines denote the segmentation of image blocks of 8×8 pixels, and a shadow area in the reference image is a preset searching range SR8 based on motion information of macro blocks of 8×8 pixels. A GDV is deduced from the image blocks of 8×8 pixels. The position of a corresponding block of an 8×8 block at a top left corner of a currently encoded macro block $MB_k$ in the view-point reference image is determined, and is marked as $OG_{MBk}$ (reference block). Then, in the 16×16 image blocks directed by each offset coordinate (x, y) in the searching range SR8 and centered by $OG_{MBk}$, new MMI $MMI_{OSM\ Bk}$ is synthesized to obtain all the optional MMI $MMI_{OSMBk} = \{MMI_{OSMBk}\ (x,\ y)|x,\ y\in\ [-2,2]\}$ in the currently encoded macro block.

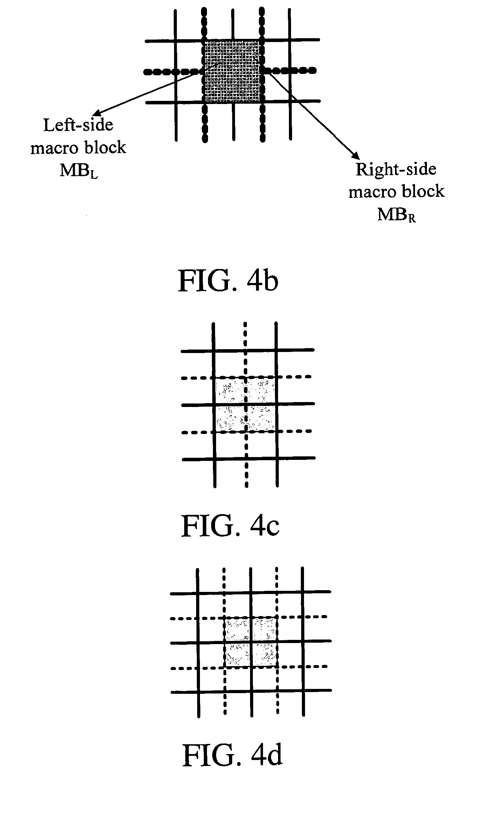

If a macro block $MB_k'$ in the searching range SR8 of the MMI in the reference image overlaps with a certain macro block partitioned by the solid lines, referring to FIG 4a, the MMI of the macro block directly serves as the corresponding MMI of the currently encoded macro block $MB_k$ in the view-point reference image. Otherwise, the original MMI in the view-point reference image needs to be split, and the split image blocks are re-combined to obtain the corresponding MMI of the currently encoded macro block $MB_k$ in the view-point reference image, as shown in FIGs. 4b, 4c, and 4d.

In the MMI obtained by combination, the macro block mode needs to be re-designated, according to a related original macro block mode and the combination mode of the new MMI. The re-designation of the macro block mode is implemented based on the boundary of the original macro block. For example, as for the combination mode of the MMI in FIG 4b, a motion mode mod $e$ of a combined macro block is re-designated according to motion modes mod $e_L$ and mod $e_R$ of a left-side macro block $MB_L$ and a right-side macro block $MB_R$ by using combining rules in Table 2. The symbols used in Table 2, namely, SKIP, 16×16, 16×8, 8×16, 8×8, and INTRA, are respectively corresponding to a skip mode, a 16×16 inter-frame prediction mode, a 16×8 inter-frame prediction mode, an 8×16 inter-frame prediction mode, an 8×8 inter-frame prediction mode, and an intra-frame prediction mode in the H.264/AVC standard.

**Table 2 Macro block mode distribution rules in the combination modes of the MMI**

| mode$_L$ | mode$_R$ | mode |
|---|---|---|
| SKIP 16×16 8×16 | SKIP<br>16×16<br>8×16 | 8×16 |
| | SKIP<br>16×8<br>8×8 | 8×8 |
| | INTRA | mode$_L$ |

(continued)

| mode$_L$ | mode$_R$ | mode |
|---|---|---|
| 16×8 8×8 | SKIP<br>16×16<br>8×16<br>16×8<br>8×8 | 8×8 |
| | INTRA | mode$_L$ |
| INTRA | SKIP<br>16×16<br>8×16<br>16×8<br>8×8 | mode$_R$ |
| | INTRA | INTRA |

The macro block mode distribution rules in other combination modes of the MMI can be deduced in the same manner. Through the implementation of the combination modes of the MMI, the coding and decoding ends are enabled to traverse to obtain optimal MMI in a specified range around the reference block, and the optimal MMI serves as reference for encoding the current macro block, thereby improving the efficiency of the MVC.

In step 3, based on all the optional MMI $MMI_{OSMBk}$ obtained in step 2, each optional MMI is adopted to perform MSM coding measurement on the currently encoded macro block, optimal MMI is selected according to a rate-distortion performance optimality principle to serve as the corresponding MMI of the currently encoded macro block in the view-point reference image, and an offset of the position of the selected MMI relative to $OG_{MB_k}$ is recorded as $OS_{MBk}$.

In step 4, when the current image has a plurality of view-point reference images, the above three steps are repeatedly performed for each view-point reference image of the current image. MSM coding measurement is performed on the currently encoded macro block by using the optimal MMI selected from each view-point reference image, optimal MMI is selected according to a rate-distortion performance optimality principle to serve as the corresponding MMI of the currently encoded macro block in the view-point reference image, and the position $OS_{MB_k}^F$ of the selected optimal macro block and a flag $LXF_{MB_k}^F$ of the view-point reference image where the selected macro block is located are recorded.

In step 5, for each currently encoded macro block MB$_k$, the flag information (including $OS_{MBk}$, $OS_{MB_k}^F$, and $LXF_{MB_k}^F$ obtained in step 3 and step 4 are written into the encoded stream. If an 8×8 block is used as a base unit to deduce the GDV and deduce the MMI in the view-point reference image, a flag may also be set in the encoded stream to indicate that the MSM processing is performed based on blocks of 8×8 pixels. Definitely, the coding and decoding sides may negotiate to decide the size of the base unit to be used.

Based on the above coding process, modifications on macro block-level syntax in JMVM processing are shown in Table 3. Syntax elements need to be added in the syntax include: motion_skip_flag, configured to indicate that an 8×8 block is used as a base unit to deduce the GDV and deduce the MMI in the view-point reference image; motion_info_offset_blk[compIdx], configured to indicate the position $OS_{MB_k}^F$ of the selected MMI in the view-point reference image; and motion_ref__view_dir, configured to indicate a flag $LXF_{MB_k}^F$ of the selected view-point reference image when the current image has a plurality of view-point reference images.

**Table 3 Modifications on JMVM macro block-level syntax**

| macro block_layer() { | C | Descriptor |
|---|---|---|
| if ( ! anchor_pic_flag) { | | |

(continued)

| macro block_layer() { | C | Descriptor |
|---|---|---|
| **motion_skip_flag** | 2 | u(1) I ae(v) |
| if(motion_skip_flag) { | | |
| for( compIdx = 0; compIdx < 2; compIdx++ ) | | |
| **motion_info_offset_blk[compIdx]** | 2 | ue(v) \| ae(v) |
| If(num_non_anchor_refs_10[view_id]>0&& | | |
| num_non_anchor_refs_11[view_id]>0) | | |
| **motion_reCview_dir** | 2 | u(1) I ae(v) |
| } | | |
| if (! motion_skip_flag) { | | |
| **mb_type** | 2 | ue(v) \| ae(v) |
| } | | |
| if( MbPartPredMode( mb_type, 0 ) != | | |
| Intra_16×16) { | | |
| **coded_block_pattern** | 2 | me(v) \| ae(v) |
| } | | |
| } | | |

A decoding process of a decoder at the decoder end is described in the following.

In step 1, MSM-related syntax elements are parsed from a received stream, which may include global_disparity_ blk_10[compIdx], global_disparity_blk_11 [compIdx], motion_skip_flag, motion_info_offset_blk [compIdx], and motion_ ref_view_dir.

In step 2, if the parsed motion_skip_flag is set to 1, it is determined that the coding end adopts the MSM to perform the coding process, and employs an 8×8 block in the MSM as a base unit to deduce the GDV and deduce the MMI in the view-point reference image. Therefore, a selected view-point reference image is determined according to the parsed motion_ref_view_dir when the current image has a plurality of view-point reference images. The position of the selected MMI in the view-point reference image is determined according to a corresponding GDV (global_disparity_ blk_10 or global_disparity_blk_11) and the parsed syntax element motion_info_offset_blk [compIdx] in the reference image. Corresponding MMI of the current image block in the view-point reference image is deduced in the same manner as the coding end, and serves as reference MMI for the currently decoded macro block.

In step 3, the currently encoded macro block is decoded by using the deduced MMI.

Moreover, the macro block mode distribution rules used in deducing the MMI as shown in FIGs. 4a to 4d have a lot of variations. For example, the desired MMI may be directly configured according to a position directed by the GDV. In this case, if the position $OS_{MB_k}$ directed by the GDV is at a top right corner of a macro block, blocks on the right side and left side of the macro block are adopted to construct a new macro block so as to obtain the desired MMI, as shown in FIG 4b. At this time, it does not need to transmit offset information of the reconstructed macro block and the block at the position directed by the GDV.

In addition, the embodiments of the present invention may also be applied for encoding and decoding single-view reference image videos. During the coding and decoding process of single-view reference image videos, the position of the currently encoded image is uniquely designated in the view-point reference image, and the skip mode is employed for encoding, only when a difference signal between a current image signal to be encoded and a predicted image signal is set to 0 after quantification.

When the embodiments of the present invention are applied for encoding single-view image videos, MSM coding measurement may also be performed on the current macro block to be encoded based on all the combinations of the MMI in the searching range determined in the view-point image. Optimal MMI is selected according to a rate-distortion performance optimality principle, and serves as reference MMI for encoding the current macro block to be encoded. Position information of the selected MMI in the view-point image is written into an encoded stream.

Though the above embodiments are described based on the JMVM, the technical solutions provided in the embodiments of the present invention may also be implemented based on other MVC standards, and the implementation principles are similar to the present invention, so the details may not be given herein again.

In view of the above, video coding and decoding solutions based on an MSM provided in the embodiments of the present invention may be expanded in parallel from MVC to single-view video coding, and a shift skip mode part is added in the original skip mode, thereby improving the coding efficiency. Specifically, the following efficacies are achieved.

As a block smaller than 16×16 pixels is used as a base unit to deduce the GDV and deduce the MMI of the currently encoded macro block in the view-point reference image. In this manner, the GDV between the currently encoded image and the view-point reference image is accurately obtained, and the MMI of the currently encoded macro block at a corresponding position in the view-point reference image is also accurately obtained. Definitely, in order to obtain a higher accuracy, a smaller block may be used as a base unit to deduce the GDV and deduce the MMI of the currently encoded macro block in the view-point reference image, for example, a 4x4 or 2x2 block is used as a base unit for deducing.

2. The corresponding MMI is accurately found for each macro block of the encoded image in the view-point reference image, thereby improving the coding efficiency of the MVC.

3. When the currently encoded image has a plurality of view-point reference images, according to the embodiments of the present invention, the MMI of the optimal performance is found in the view-point reference images, so as to fully utilize the motion information in all the view-point reference images, thereby further improving the coding efficiency of the MVC.

4. When the optimal MMI is searched in the searching range, the coding efficiency of the MVC is improved according to the combination mode of the MMI provided in the embodiments of the present invention.

Definitely, the second, third, and fourth improvements proposed in the solutions according to the embodiments of the present invention may be combined in different modes and used together with the first improvement upon actual requirements based on the first improvement.

Those of ordinary skill in the art should understand that all or a part of the process of the method according to the embodiments of the present invention may be implemented by a program instructing relevant hardware. The program may be stored in a computer readable storage medium. When the program is run, the process of the method according to the embodiments of the present invention is performed. The storage medium may be a magnetic disk, an optical disk, a read-only memory (ROM), or a random access memory (RAM).

In accordance with the embodiments of the method of the present invention, coders and decoders with the following configurations are provided in the embodiments of the present invention.

In a first configuration, the coder according to an embodiment of the present invention includes: a unit, configured to determine a corresponding reference block of a current macro block to be encoded in a view-point reference image, according to a direction of a disparity vector from a current image relative to the view-point reference image deduced by using a block smaller than 16×16 pixels as a base unit; and a unit, configured to encode the current macro block to be encoded, according to motion information of a macro block that the determined corresponding reference block belongs to.

In a second configuration, the coder according to an embodiment of the present invention includes: a unit, configured to, for each view-point reference image of a current image, determine a corresponding reference block of a current macro block to be encoded in the view-point reference image, according to a direction of a disparity vector from the current image relative to the view-point reference image deduced by using a block smaller than 16×16 pixels as a base unit; a unit, configured to perform MSM coding measurement on the current macro block to be encoded, according to motion information of a macro block that the determined corresponding reference block of the current macro block to be encoded in each view-point reference image belongs to; a unit, configured to select an optimal macro block from the macro blocks, according to a rate-distortion performance optimality principle based on measurement results; and a unit, configured to encode the current macro block to be encoded, according to motion information of the selected macro block, and carry in an encoded stream a flag of the view-point reference image where the selected macro block is located.

In a third configuration, the coder according to an embodiment of the present invention includes: a unit, configured to determine a corresponding reference block of a current macro block to be encoded in a view-point reference image, according to a direction of a disparity vector from a current image relative to the view-point reference image deduced by using a block smaller than 16×16 pixels as a base unit; a unit, configured to perform MSM coding measurement on the current macro block to be encoded, according to motion information of each macro block formed by base unit blocks within a specified range around the determined corresponding reference block; a unit, configured to select an optimal macro block from the specified range around the reference block, according to a rate-distortion performance optimality principle based on measurement results; and a unit, configured to encode the current macro block to be encoded, according to motion information of the selected macro block.

In a fourth configuration, the coder according to an embodiment of the present invention includes: a unit, configured to, for each view-point reference image of a current image, determine a corresponding reference block of a current macro block to be encoded in the view-point reference image, according to a direction of a disparity vector from the current image relative to the view-point reference image deduced by using a block smaller than 16×16 pixels as a base unit; a unit, configured to perform MSM measurement on the current macro block to be encoded, according to motion information of each macro block formed by the base unit blocks within a specified range around the determined corresponding reference block; a unit, configured to select an optimal macro block from the specified range around the reference block, according to a rate-distortion performance optimality principle based on measurement results; a unit, configured to perform MSM coding measurement on the current macro block to be encoded, according to motion information of the macro block selected from each view-point reference image; a unit, configured to select an optimal macro block from the macro blocks selected from the view-point reference images, according to the rate-distortion performance optimality principle based on measurement results; and a unit, configured to encode the current macro block to be encoded, according to motion information of the selected macro block, and carry in an encoded stream a flag of the view-point reference image where the selected macro block is located.

In a fifth configuration, the coder according to an embodiment of the present invention includes: a unit, configured to determine a corresponding reference block of a current macro block to be encoded in an adjacent frame image, according to a direction of a motion vector from a current image relative to the adjacent frame image deduced by using a block smaller than 16×16 pixels as a base unit; and a unit, configured to encode the current macro block to be encoded, according to motion information of a macro block that the determined corresponding reference block belongs to.

In a sixth configuration, the coder according to an embodiment of the present invention includes: a unit, configured to determine a corresponding reference block of a current macro block to be encoded in an adjacent frame image, according to a direction of a motion vector from a current image relative to the adjacent frame image deduced by using a block smaller than 16×16 pixels as a base unit; a unit, configured to perform MSM measurement on the current macro block to be encoded, according to motion information of each macro block formed by the base unit blocks within a specified range around the determined corresponding reference block; a unit, configured to select an optimal macro block from the specified range around the reference block, according to a rate-distortion performance optimality principle based on measurement results; and a unit, configured to encode the current macro block to be encoded, according to motion information of the selected macro block.

The decoders provided in the embodiments of the present invention may have the following configurations.

In a first configuration, the decoder according to an embodiment of the present invention includes: a unit, configured to determine a corresponding reference block of a current macro block to be decoded in a view-point reference image, according to a direction of a disparity vector from a current image relative to the view-point reference image deduced by using a block smaller than 16×16 pixels as a base unit; and a unit, configured to decode the current macro block to be decoded, according to motion information of a macro block that the determined corresponding reference block belongs to.

In a second configuration, the decoder according to an embodiment of the present invention includes: a unit, configured to decode a view-point reference image flag carried in a received encoded stream; a unit, configured to determine a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; and a unit, configured to decode the current macro block to be decoded, according to motion information of a macro block that the determined corresponding reference block belongs to.

In a third configuration, the decoder according to an embodiment of the present invention includes: a unit, configured to determine a corresponding reference block of a current macro block to be decoded in a view-point reference image, according to a direction of a disparity vector from a current image relative to the view-point reference image deduced by using a block smaller than 16×16 pixels as a base unit; a unit, configured to decode offset information carried in a received encoded stream; and a unit, configured to deviate by a corresponding offset in the determined corresponding reference block according to the offset information to obtain a corresponding macro block, and decode the current macro block to be decoded, according to motion information of the obtained macro block.

In a fourth configuration, the decoder according to an embodiment of the present invention includes: a unit, configured to decode a view-point reference image flag carried in a received encoded stream; a unit, configured to determine a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; a unit, configured to decode offset information carried in the received encoded stream; and a unit, configured to deviate by a corresponding offset in the determined corresponding reference block according to the offset information to obtain a corresponding macro block, and decode the current macro block to be decoded, according to motion information of the obtained macro block.

In a fifth configuration, the decoder according to an embodiment of the present invention includes: a unit, configured to determine a corresponding reference block of a current macro block to be decoded in an adjacent frame image, according to a direction of a motion vector from a current image relative to the adjacent frame image deduced by using a block smaller than 16×16 pixels as a base unit; and a unit, configured to decode the current macro block to be decoded, according to motion information of the macro block that the determined corresponding reference block belongs to.

In a sixth configuration, the decoder according to an embodiment of the present invention includes: a unit, configured to determine a corresponding reference block of a current macro block to be decoded in an adjacent frame image, according to a direction of a motion vector from a current image relative to the adjacent frame image deduced by using a block smaller than $16\times16$ pixels as a base unit; a unit, configured to decode offset information carried in a received encoded stream; and a unit, configured to deviate by a corresponding offset in the determined corresponding reference block according to the offset information to obtain a corresponding macro block, and decode the current macro block to be decoded, according to motion information of the obtained macro block.

It is apparent to persons skilled in the art that modifications and variations can be made to the present invention without departing from the spirit or scope of the invention. Moreover, through simple concept extensions, the corresponding reference block can be determined by using simple conversion between global depth information and global disparity. Therefore, it is intended that the present invention cover modifications and variations of this invention provided they fall within the scope of the following claims and their equivalents.

## Claims

1. A multi-view video coding (MVC) method based on a motion skip mode (MSM), comprising:

   determining a corresponding reference block of a current macro block to be encoded in a view-point reference image, according to a direction of a disparity vector from a current image relative to the view-point reference image deduced by using a block smaller than $16\times16$ pixels as a base unit; and
   encoding the current macro block to be encoded, according to motion information of a macro block that the determined corresponding reference block belongs to.

2. The method according to claim 1, wherein when base unit blocks forming the macro block that the corresponding reference block belongs to are located in different macro blocks of the reference image, the macro block is combined according to macro block modes of the base unit blocks.

3. A multi-view video decoding method based on a motion skip mode (MSM), comprising:

   determining a corresponding reference block of a current macro block to be decoded in a view-point reference image, according to a direction of a disparity vector from a current image relative to the view-point reference image deduced by using a block smaller than $16\times16$ pixels as a base unit; and
   decoding the current macro block to be decoded, according to motion information of a macro block that the determined corresponding reference block belongs to.

4. The method according to claim 3, wherein when base unit blocks forming the macro block that the corresponding reference block belongs to are located in different macro blocks of the reference image, the macro block is combined according to macro block modes of the base unit blocks.

5. A multi-view video coder based on a motion skip mode (MSM), comprising:

   a unit, configured to determine a corresponding reference block of a current macro block to be encoded in a view-point reference image, according to a direction of a disparity vector from a current image relative to the view-point reference image deduced by using a block smaller than $16\times16$ pixels as a base unit; and
   a unit, configured to encode the current macro block to be encoded, according to motion information of a macro block that the determined corresponding reference block belongs to.

6. A multi-view video decoder based on a motion skip mode (MSM), comprising:

   a unit, configured to determine a corresponding reference block of a current macro block to be decoded in a view-point reference image, according to a direction of a disparity vector from a current image relative to the view-point reference image deduced by using a block smaller than $16\times16$ pixels as a base unit; and
   a unit, configured to decode the current macro block to be decoded, according to motion information of a macro block that the determined corresponding reference block belongs to.

7. A multi-view video coding (MVC) method based on a motion skip mode (MSM), comprising:

for each view-point reference image of a current image, determining a corresponding reference block of a current macro block to be encoded in each view-point reference image, according to a direction of a global disparity vector (GDV) from the current image relative to the view-point reference image deduced by using a block smaller than 16×16 pixels as a base unit;

performing MSM coding measurement on the current macro block to be encoded, according to motion information of a macro block that the determined corresponding reference block of the current macro block to be encoded in each view-point reference image belongs to;

selecting an optimal macro block from the macro blocks, according to a rate-distortion performance optimality principle based on measurement results; and

encoding the current macro block to be encoded, according to motion information of the selected macro block, and carrying in an encoded stream a flag of the view-point reference image where the selected macro block is located.

8. The method according to claim 7, wherein when base unit blocks forming the macro block that the corresponding reference block belongs to are located in different macro blocks of the reference image, the macro block is combined according to macro block modes of the base unit blocks.

9. A multi-view video decoding method based on a motion skip mode (MSM), comprising:

decoding a view-point reference image flag carried in a received encoded stream;

determining a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; and

decoding the current macro block to be decoded, according to motion information of a macro block that the determined corresponding reference block belongs to.

10. The method according to claim 9, wherein when base unit blocks forming the macro block that the corresponding reference block belongs to are located in different macro blocks of the reference image, the macro block is combined according to macro block modes of the base unit blocks.

11. A multi-view video coder based on a motion skip mode (MSM), comprising:

a unit, configured to, for each view-point reference image of a current image, determine a corresponding reference block of a current macro block to be encoded in each view-point reference image, according to a direction of a disparity vector from the current image relative to the view-point reference image deduced by using a block smaller than 16×16 pixels as a base unit;

a unit, configured to perform MSM coding measurement on the current macro block to be encoded, according to motion information of a macro block that the determined corresponding reference block of the current macro block to be encoded in each view-point reference image belongs to;

a unit, configured to select an optimal macro block from the macro blocks, according to a rate-distortion performance optimality principle based on measurement results; and

a unit, configured to encode the current macro block to be encoded, according to motion information of the selected macro block, and carry in an encoded stream a flag of the view-point reference image where the selected macro block is located.

12. A multi-view video decoder based on a motion skip mode (MSM), comprising:

a unit, configured to decode a view-point reference image flag carried in a received encoded stream;

a unit, configured to determine a corresponding reference block of a current macro block to be decoded in an obtained view-point reference image identified by the view-point reference image flag, according to a direction of a disparity vector from a current image relative to the view-point reference image deduced by using a block smaller than 16×16 pixels as a base unit; and

a unit, configured to decode the current macro block to be decoded, according to motion information of a macro block that the determined corresponding reference block belongs to.

13. A multi-view video coding (MVC) method based on a motion skip mode (MSM), comprising:

determining a corresponding reference block of a current macro block to be encoded in a view-point reference image, according to a direction of a disparity vector from a current image relative to the view-point reference image deduced by using a block smaller than 16×16 pixels as a base unit;

performing MSM coding measurement on the current macro block to be encoded, according to motion information of each macro block formed by base unit blocks within a specified range around the determined corresponding reference block;

selecting an optimal macro block from the specified range around the reference block, according to a rate-distortion performance optimality principle based on measurement results; and

encoding the current macro block to be encoded, according to motion information of the selected macro block.

14. The method according to claim 13, wherein when the base unit blocks forming the macro block are located in different macro blocks of the reference image, the macro block is combined according to macro block modes of the base unit blocks.

15. The method according to claim 13, further comprising:

encoding offset information of the selected macro block relative to the corresponding reference block into an encoded stream.

16. A multi-view video decoding method based on a motion skip mode (MSM), comprising:

determining a corresponding reference block of a current macro block to be decoded in a view-point reference image, according to a direction of a disparity vector from a current image relative to the view-point reference image deduced by using a block smaller than 16×16 pixels as a base unit;

decoding offset information carried in a received encoded stream; and

deviating by a corresponding offset in the determined corresponding reference block according to the offset information to obtain a corresponding macro block, and decoding the current macro block to be decoded, according to motion information of the obtained macro block.

17. The method according to claim 16, wherein when base unit blocks forming the macro block that the determined corresponding reference block belongs to are located in different macro blocks of the reference image, the macro block is combined according to macro block modes of the base unit blocks.

18. A multi-view video coder based on a motion skip mode (MSM), comprising:

a unit, configured to determine a corresponding reference block of a current macro block to be encoded in a view-point reference image, according to a direction of a disparity vector from a current image relative to the view-point reference image deduced by using a block smaller than 16×16 pixels as a base unit;

a unit, configured to perform MSM coding measurement on the current macro block to be encoded, according to motion information of each macro block formed by base unit blocks within a specified range around the determined corresponding reference block;

a unit, configured to select an optimal macro block from the specified range around the reference block, according to a rate-distortion performance optimality principle based on measurement results; and

a unit, configured to encode the current macro block to be encoded, according to motion information of the selected macro block.

19. A multi-view video decoder based on a motion skip mode (MSM), comprising:

a unit, configured to determine a corresponding reference block of a current macro block to be decoded in a view-point reference image, according to a direction of a disparity vector from a current image relative to the view-point reference image deduced by using a block smaller than 16×16 pixels as a base unit;

a unit, configured to decode offset information carried in a received encoded stream; and

a unit, configured to deviate by a corresponding offset in the determined corresponding reference block according to the offset information to obtain a corresponding macro block, and decode the current macro block to be decoded, according to motion information of the obtained macro block.

20. A multi-view video coding (MVC) method based on a motion skip mode (MSM), comprising:

for each view-point reference image of a current image,

determining a corresponding reference block of a current macro block to be encoded in the view-point reference image, according to a direction of a disparity vector from the current image relative to the view-point reference image deduced by using a block smaller than 16×16 pixels as a base unit;

performing MSM measurement on the current macro block to be encoded, according to motion information of each macro block formed by base unit blocks within a specified range around the determined corresponding reference block;

selecting an optimal macro block from the specified range around the reference block, according to a rate-distortion performance optimality principle based on measurement results;

performing MSM coding measurement on the current macro block to be encoded, according to motion information of the macro block selected from each view-point reference image;

selecting an optimal macro block from the macro blocks selected from the view-point reference images, according to the rate-distortion performance optimality principle based on measurement results; and

encoding the current macro block to be encoded, according to the motion information of the selected macro block, and carrying in an encoded stream a flag of the view-point reference image where the selected macro block is located.

21. The method according to claim 20, wherein when the base unit blocks forming the macro block are located in different macro blocks of the reference image, the macro block is combined according to macro block modes of the base unit blocks.

22. The method according to claim 20, further comprising:

encoding into the encoded stream offset information of the selected macro block relative to the corresponding reference block of the current macro block to be encoded in the reference image where the selected macro block is located.

23. A multi-view video decoding method based on a motion skip mode (MSM), comprising:

decoding a view-point reference image flag carried in a received encoded stream;

determining a corresponding reference block of a current macro block to be decoded in an obtained view-point reference image identified by the view-point reference image flag, according to a direction of a disparity vector from a current image relative to the view-point

reference image deduced by using a block smaller than 16×16 pixels as a base unit;

decoding offset information carried in the received encoded stream; and

deviating by a corresponding offset in the determined corresponding reference block according to the offset information to obtain a corresponding macro block, and decoding the current macro block to be decoded, according to motion information of the obtained macro block.

24. A multi-view video coder based on a motion skip mode (MSM), comprising:

a unit, configured to, for each view-point reference image of a current image, determine a corresponding reference block of a current macro block to be encoded in the view-point reference image, according to a direction of a disparity vector from the current image relative to the view-point reference image deduced by using a block smaller than 16×16 pixels as a base unit;

a unit, configured to perform MSM measurement on the current macro block to be encoded, according to motion information of each macro block formed by base unit blocks within a specified range around the determined corresponding reference block;

a unit, configured to select an optimal macro block from the specified range around the reference block, according to a rate-distortion performance optimality principle based on measurement results;

a unit, configured to perform MSM coding measurement on the current macro block to be encoded, according to motion information of the macro block selected from each view-point reference image;

a unit, configured to select an optimal macro block from the macro blocks selected from the view-point reference images, according to the rate-distortion performance optimality principle based on measurement results; and

a unit, configured to encode the current macro block to be encoded, according to motion information of the selected macro block, and carry in an encoded stream a flag of the view-point reference image where the selected macro block is located.

**25.** A multi-view video decoder based on a motion skip mode (MSM), comprising:

a unit, configured to decode a view-point reference image flag carried in a received encoded stream;

a unit, configured to determine a corresponding reference block of a current macro block to be decoded in an obtained view-point reference image identified by the view-point reference image flag, according to a direction of a disparity vector from a current image relative to the view-point reference image deduced by using a block smaller than $16\times16$ pixels as a base unit;

a unit, configured to decode offset information carried in the received encoded stream; and

a unit, configured to deviate by a corresponding offset in the determined corresponding reference block according to the offset information to obtain a corresponding macro block, and decode the current macro block to be decoded, according to motion information of the obtained macro block.

**26.** A single-view video coding method based on a motion skip mode (MSM), comprising:

determining a corresponding reference block of a current macro block to be encoded in an adjacent frame image, according to a direction of a motion vector from a current image relative to the adjacent frame image deduced by using a block smaller than $16\times16$ pixels as a base unit; and

encoding the current macro block to be encoded, according to motion information of a macro block that the determined corresponding reference block belongs to.

**27.** The method according to claim 26, wherein when base unit blocks forming the macro block that the corresponding reference block belongs to are located in different macro blocks of the reference image, the macro block is combined according to macro block modes of the base unit blocks.

**28.** A single-view video decoding method based on a motion skip mode (MSM), comprising:

determining a corresponding reference block of a current macro block to be decoded in an adjacent frame image, according to a direction of a motion vector from a current image relative to the adjacent frame image deduced by using a block smaller than $16\times16$ pixels as a base unit; and

decoding the current macro block to be decoded, according to motion information of a macro block that the determined corresponding reference block belongs to.

**29.** The method according to claim 28, wherein when base unit blocks forming the macro block that the corresponding reference block belongs to are located in different macro blocks of the reference image, the macro block is combined according to macro block modes of the base unit blocks.

**30.** A single-view video coder based on a motion skip mode (MSM), comprising:

a unit, configured to determine a corresponding reference block of a current macro block to be encoded in an adjacent frame image, according to a direction of a motion vector from a current image relative to the adjacent frame image deduced by using a block smaller than $16\times16$ pixels as a base unit; and

a unit, configured to encode the current macro block to be encoded, according to motion information of a macro block that the determined corresponding reference block belongs to.

**31.** A single-view video decoder based on a motion skip mode (MSM), comprising:

a unit, configured to determine a corresponding reference block of a current macro block to be decoded in an adjacent frame image, according to a direction of a motion vector from a current image relative to the adjacent frame image deduced by using a block smaller than $16\times16$ pixels as a base unit; and

a unit, configured to decode the current macro block to be decoded, according to motion information of a macro block that the determined corresponding reference block belongs to.

**32.** A single-view video coding method based on a motion skip mode (MSM), comprising:

determining a corresponding reference block of a current macro block to be encoded in an adjacent frame image, according to a direction of a motion vector from a current image relative to the adjacent frame image deduced by using a block smaller than $16\times16$ pixels as a base unit;

performing MSM measurement on the current macro block to be encoded, according to motion information of each macro block formed by base unit blocks within a specified range around the determined corresponding reference block;

selecting an optimal macro block from the specified range around the reference block, according to a rate-distortion performance optimality principle based on measurement results; and

encoding the current macro block to be encoded, according to motion information of the selected macro block.

33. The method according to claim 32, wherein when the base unit blocks forming the macro block are located in different macro blocks of the reference image, the macro block is combined according to macro block modes of the base unit blocks.

34. The method according to claim 32, further comprising:

encoding offset information of the selected macro block relative to the corresponding reference block into an encoded stream.

35. A single-view video decoding method based on a motion skip mode (MSM), comprising:

determining a corresponding reference block of a current macro block to be decoded in an adjacent frame image, according to a direction of a motion vector from a current image relative to the adjacent frame image deduced by using a block smaller than $16 \times 16$ pixels as a base unit;

decoding offset information carried in a received encoded stream; and

deviating by a corresponding offset in the determined corresponding reference block according to the offset information to obtain a corresponding macro block, and decoding the current macro block to be decoded, according to motion information of the obtained macro block.

36. The method according to claim 35, wherein when base unit blocks forming the macro block are located in different macro blocks of the reference image, the macro block is combined according to macro block modes of the base unit blocks.

37. A single-view video coder based on a motion skip mode (MSM), comprising:

a unit, configured to determine a corresponding reference block of a current macro block to be encoded in an adjacent frame image, according to a direction of a motion vector from a current image relative to the adjacent frame image deduced by using a block smaller than $16 \times 16$ pixels as a base unit;

a unit, configured to perform MSM measurement on the current macro block to be encoded, according to motion information of each macro block formed by base unit blocks within a specified range around the determined corresponding reference block;

a unit, configured to select an optimal macro block from the specified range around the reference block, according to a rate-distortion performance optimality principle based on measurement results; and

a unit, configured to encode the current macro block to be encoded, according to motion information of the selected macro block.

38. A single-view video decoder based on a motion skip mode (MSM), comprising:

a unit, configured to determine a corresponding reference block of a current macro block to be decoded in an adjacent frame image, according to a direction of a motion vector from a current image relative to the adjacent frame image deduced by using a block smaller than $16 \times 16$ pixels as a base unit;

a unit, configured to decode offset information carried in a received encoded stream; and

a unit, configured to deviate by a corresponding offset in the determined corresponding reference block according to the offset information to obtain a corresponding macro block, and decode the current macro block to be decoded according to motion information of the obtained macro block.

FIG. 1

EP 2 207 351 A1

FIG. 2

21

FIG. 3

FIG. 4a

Left-side
macro block
$MB_L$

Right-side
macro block
$MB_R$

FIG. 4b

FIG. 4c

FIG. 4d

# INTERNATIONAL SEARCH REPORT

| International application No. |
|---|
| PCT/CN2008/072622 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC:H04N5/-;H04N7/-; H04N13/-;G06T9/-

Documentation searched other than minimum documentation to the extent that such documents are included in the fields searched

Electronic data base consulted during the international search (name of data base and, where practicable, search terms used)

WPI;EPODOC;PAJ;CNKI;CNPAT: coding ,encoding, decoding, compress, three dimension, stereoscopic, disparity, predict, estimate, displacement, motion,skip

**C. DOCUMENTS CONSIDERED TO BE RELEVANT**

| Category* | Citation of document, with indication, where appropriate, of the relevant passages | Relevant to claim No. |
|---|---|---|
| Y | CN1816153A（SAMSUNG ELECTRONICS CO LTD）9.Aug.2006（9.8.2006），page 6 line 20-page 9 line 5 | 1-6，9-10，12，16-17，19，23，25-31，35-36，38 |
| Y | CN1767655A（UNIV NINGBO）3.May.2006（3.5.2006），claim 1 | 1-6，9-10，12，16-17，19，23，25 |
| Y | CN1658673A（UNIV NANJING）24. Aug .2005（24.8.2005），page 3 last paragraph-page 4 paragraph 2 | 16-17,19,23,25, 35-36,38 |
| Y | KITAHARA Masaki，et al. ”Multi-view Video Coding using View Interpolation and Reference Picture Selection ”. Multimedia and Expo, 2006 IEEE International Conference on, 9.July.2006（9.7.2006），page 98 left column paragraph 2 | 26-31，35-36，38 |
| A | US5612735A (HASKELL Barin G. et al) 18.Mar.1997（18.3.1997）the whole document | 1-38 |
| A | US2007/0064800A1(HA Tae-hyeun, et al) 22. Mar .2007（22.3.2007）the whole document | 1-38 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29.Dec.2008（29.12. 2008） | **15 Jan. 2009 (15.01.2009)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>     **XU XIN**<br>Telephone No. (86-10)62414189 |

Form PCT/ISA/210 (second sheet) (April 2007)

<table>
<tr><td colspan="2" rowspan="2">INTERNATIONAL SEARCH REPORT<br>Information on patent family members</td><td colspan="2">International application No.<br><br>PCT/CN2008/072622</td></tr>
</table>

| Patent Documents referred in the Report | Publication Date | Patent Family | Publication Date |
|---|---|---|---|
| CN1816153A | 09.08.2006 | NL1031057A | 07.08.2006 |
| | | KR20060089495A | 09.08.2006 |
| | | US2006177123A | 10.08.2006 |
| CN1767655A | 03.05.2006 | None | |
| CN1658673A | 24.08.2005 | None | |
| US5612735A | 18.03.1997 | None | |
| US2007/0064800A1 | 22.03.2007 | WO2007035054A1 | 29.03.2007 |
| | | EP1927250A1 | 04.06.2008 |

Form PCT/ISA/210 (patent family annex) (April 2007)

## INTERNATIONAL SEARCH REPORT

International application No.

PCT/CN2008/072622

CLASSIFICATION OF SUBJECT MATTER :

H04N7/24(2006.01)i
H04N13/00(2006.01)i